# DEMANDE DE BREVET EUROPEEN

(11) **EP 4 667 287 A1**
(43) Date de publication de la demande: **24.12.2025**
(21) Numéro de dépôt: 25182848.9
(22) Date de dépôt: 13.06.2025
(51) Int. Cl.: B60Q 3/41, F21S 10/00, F21V 9/12, B61D 29/00

(54) **DISPOSITIF D ÉCLAIRAGE POUR VÉHICULE**

(30) Priorité: 18.06.2024 FR 2406464
(71) Demandeur: ALSTOM Holdings, 93400 Saint-Ouen-sur-Seine (FR)
(72) Inventeur: Grillet, Augustin, 59163 CONDE SUR L'ESCAUT (FR)
(74) Mandataire: Plasseraud IP

(57) **Abrégé**

La présente invention concerne un véhicule, notamment ferroviaire, comprenant une caisse portée par des roues et, à l'intérieur de la caisse, un dispositif d'éclairage (3) comprenant un panneau lumineux (4) présentant une surface émissive et une dalle translucide (5) recouvrant ladite surface émissive, ledit véhicule étant caractérisé en ce que la dalle translucide (5) délimite un caisson translucide (6) clos rempli au moins partiellement par au moins un fluide (7).

## Description

La présente invention a pour objet un véhicule, notamment ferroviaire, comprenant une caisse portée par des roues et, à l'intérieur de la caisse, un dispositif d'éclairage comprenant un panneau lumineux présentant une surface émissive et une dalle translucide recouvrant ladite surface émissive.

On recherche de plus en plus à mettre en place des effets d'animation ou décorations pour les utilisateurs, par exemple dans les véhicules, notamment ferroviaires.

Les dispositifs d'éclairage ou luminaires actuels dans les véhicules, notamment ferroviaires, ne présentent pas d'effet d'animation. Un certain effet dynamique peut être obtenu en divisant un panneau de LED en plusieurs zones et en mettant en œuvre un contrôle individuel (dans le temps) des différentes zones par le biais d'un logiciel (alias "gradation locale"). Toutefois, une telle mise en œuvre nécessite une électronique complexe et est donc coûteuse (multiplication des unités de contrôle de la lumière : LCU). En outre, une telle solution ne permet pas une réelle animation d'un motif, mais seulement une variation de l'intensité et/ou de la couleur.

Un but de l'invention est de fournir un véhicule, notamment ferroviaire, comprenant un dispositif d'éclairage avec des effets d'animation, sans nécessiter de dispositifs électroniques complexes.

Un autre but de l'invention est de fournir un véhicule, notamment ferroviaire, comprenant un dispositif d'éclairage avec des effets d'animation, simple à mettre en œuvre et peu coûteux.

Ainsi, la présente invention concerne un véhicule, notamment ferroviaire, comprenant une caisse 1 portée par des roues 2 et, à l'intérieur de la caisse 1, un dispositif d'éclairage 3 comprenant un panneau lumineux 4 présentant une surface émissive et une dalle translucide 5 recouvrant ladite surface émissive, ledit véhicule étant caractérisé en ce que la dalle translucide 5 délimite un caisson translucide 6 clos rempli au moins partiellement par au moins un fluide 7, ledit fluide présentant une densité optique strictement supérieure à zéro.

Le véhicule selon l'invention peut comprendre l'une ou plusieurs caractéristiques suivantes, prise(s) isolement ou suivant toute combinaison techniquement possible :
- le dispositif d'éclairage comprend en outre un film avec un motif décoratif, ledit film et la dalle translucide étant empilés en regard de la surface émissive du panneau lumineux ;
- le dispositif d'éclairage comprend en outre une couche protectrice translucide ;
- le caisson translucide de la dalle translucide est un caisson de polycarbonate ;
- le fluide est un gel ou un liquide, éventuellement coloré, ou un mélange de liquides non miscibles avec des densités optiques différentes ;
- le caisson de la dalle translucide comprend des faces latérales, perpendiculaires à la surface émissive du panneau lumineux, recouvertes d'un revêtement réflectif ;
- la dalle translucide comprend, à l'opposé de la surface émissive, une surface apte à diffuser la lumière ;
- le film comprend une couche de polycarbonate sur laquelle est déposé un film décoratif ou une sérigraphie ;
- la couche protectrice est une couche translucide de polycarbonate ; et
- la surface émissive du panneau lumineux est parallèle à la direction de circulation du véhicule.

L'invention sera mieux comprise à la lecture de la description qui va suivre, donnée uniquement à titre d'exemple, et faite en se référant aux dessins annexés, sur lesquels :
- [Fig.1] la [Fig.1] est une vue schématique de côté de l'extérieur d'une voiture de véhicule ferroviaire selon l'invention ;
- [Fig.2] la [Fig.2] est une vue schématique en éclaté de côté d'un dispositif d'éclairage selon l'invention lorsque le véhicule est à l'arrêt ou se déplace à une vitesse constante ; et
- [Fig.3] la [Fig.3] est une vue schématique en éclaté de côté d'un dispositif d'éclairage selon l'invention lorsque le véhicule est en phase d'accélération.

Dans ce qui suit, les orientations sont les orientations habituelles d'un véhicule ferroviaire. Ainsi, les termes « avant », « arrière », « gauche », « droit » s'entendent généralement par rapport au sens normal de circulation d'un véhicule ferroviaire.

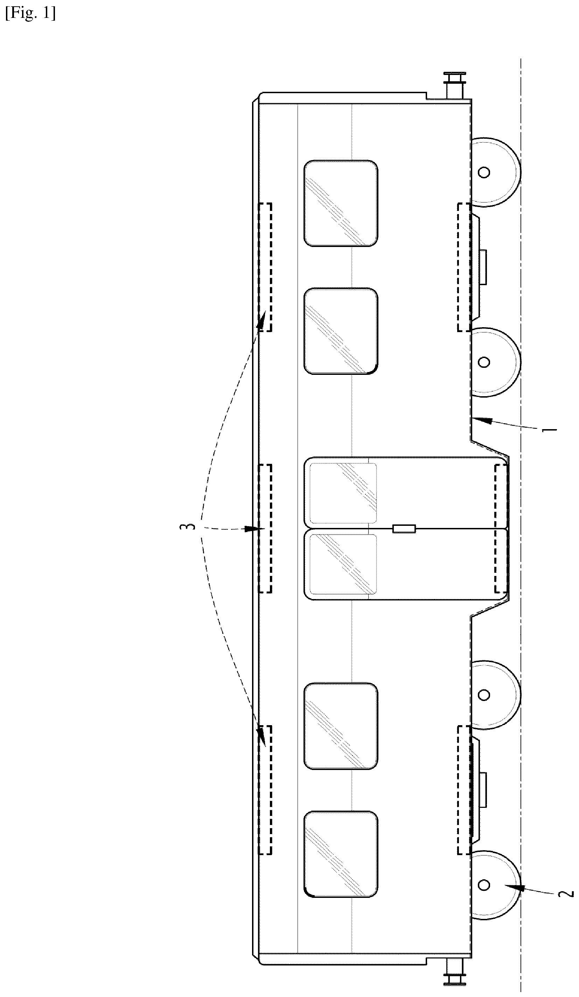

La [Fig.1] représente une voiture de véhicule ferroviaire comprenant une caisse 1 et des roues 2, ainsi qu'un dispositif d'éclairage 3, notamment situé au plafond de la caisse du véhicule selon l'invention.

Comme illustré dans la [Fig.1], le dispositif d'éclairage 3 est par exemple situé au niveau du sol du véhicule selon l'invention.

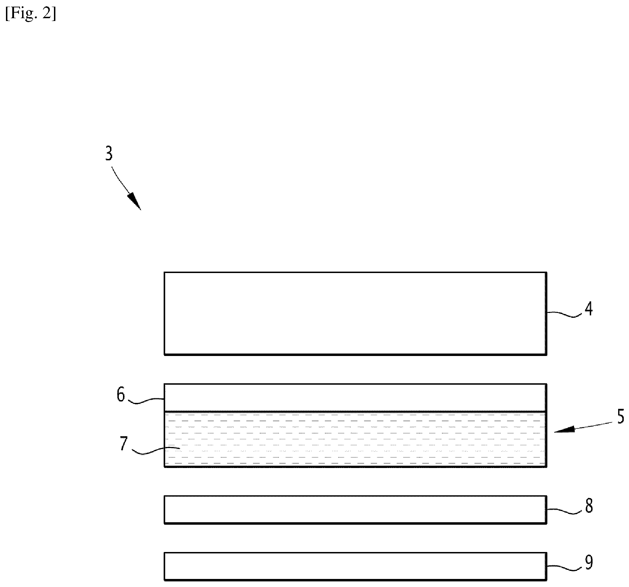

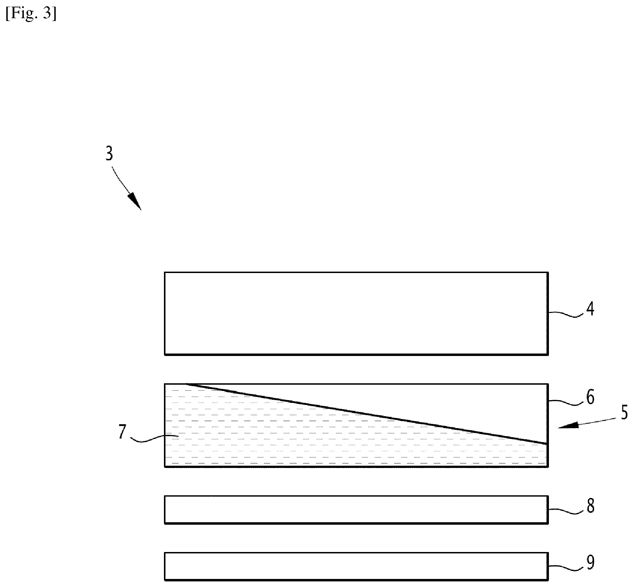

Comme illustré dans les figures 2 et 3, le dispositif d'éclairage 3 selon l'invention comprend un panneau lumineux 4, par exemple un panneau de LED, présentant une surface émissive, laquelle surface émissive est recouverte par une dalle translucide 5, la dalle translucide 5 délimitant un caisson translucide clos 6 contenant au moins un fluide 7, ledit fluide présentant une densité optique strictement supérieure à zéro. Le caisson translucide 6 est clos et est rempli, au moins partiellement, par ledit fluide.

Le panneau lumineux 4 est par exemple un panneau de LED. Par exemple, le panneau lumineux est un panneau de LED par la mise en œuvre de la technologie standard, éventuellement couplée à une technologie d'éclairage intelligente, pour la variation de l'intensité et/ou de la température/couleur. Le nombre et la disposition des LED dans le panneau lumineux de l'invention est adaptée avantageusement pour un effet d'éclairage uniforme.

La dalle translucide 5 délimite un caisson translucide 6 qui est par exemple composé d'un matériau en polycarbonate. Par exemple, la dalle translucide 5 a les mêmes dimensions ou des dimensions légèrement supérieures à celles du panneau lumineux 4. Avantageusement, elle comprend une face avant diffusante, c'est-à-dire une face apte à diffuser la lumière située à l'opposé de la surface émissive.

De préférence, l'épaisseur de la dalle translucide 5 est d'environ 2 à 3 cm, voire est inférieure à 2 cm.

Comme illustré par exemple par les figures 2 et 3, le caisson translucide 6 est partiellement rempli d'un fluide, notamment un composant liquide translucide, capable de se déplacer librement dans le volume intérieur du caisson en fonction des forces externes appliquées au véhicule 1, suivant les lois de la mécanique des fluides.

Le fluide 7 selon l'invention est par exemple un gel ou un liquide, éventuellement teinté, présentant une atténuation optique non nulle, ou une densité optique strictement supérieure à zéro, la densité optique D étant définie par D= - log₁₀(T), où T représente la transmittance dudit fluide, soit T = Intensité en sortie/Intensité en entrée. Selon un mode de réalisation, le fluide 7 est un fluide translucide.

Selon un mode de réalisation, le fluide 7 est un mélange de plusieurs liquides non miscibles ayant chacun une densité optique ou une absorbance différente, par exemple de l'eau (éventuellement colorée). Lorsque le véhicule accélère ou décélère, la quantité de liquide traversée par la lumière à chaque emplacement XY du luminaire varie, ce qui entraîne une atténuation optique variable de la lumière sortante.

Selon un mode de réalisation, le fluide 7 selon l'invention est un gel unique ou un liquide unique, éventuellement teinté. Selon ce mode de réalisation, le caisson translucide 6 est partiellement rempli dudit fluide, le reste du volume du caisson étant occupé par de l'air.

Selon un autre mode de réalisation, le fluide 7 selon l'invention est un mélange de plusieurs liquides différents non miscibles ayant chacun une densité optique ou une absorbance différente. Selon ce mode de réalisation, le caisson translucide 6 est partiellement rempli dudit fluide ou ledit caisson translucide 6 est entièrement rempli dudit fluide.

Comme illustré par la [Fig.2], lorsque le véhicule est à l'arrêt ou est immobile, ou lorsqu'il se déplace ou est en mouvement à une vitesse constate, le fluide 7 présente une surface extérieure sensiblement parallèle à la direction de circulation dudit véhicule.

Comme illustré par la [Fig.3], lorsque le véhicule accélère, la surface extérieure du fluide 7 présente une surface extérieure qui n'est plus parallèle à la direction de circulation dudit véhicule. Selon ce mode de réalisation, l'angle formé entre le sens de direction du véhicule et entre la surface extérieure du fluide 7 est supérieur à 90°.

Lorsque le véhicule décélère, la surface extérieure du fluide 7 présente une surface extérieure qui n'est plus parallèle à la direction de circulation dudit véhicule. Selon ce mode de réalisation, l'angle formé entre le sens de direction du véhicule et entre la surface extérieure du fluide 7 est inférieur à 90°.

Par exemple, la dalle translucide 5 a une épaisseur interne de 2 cm et est remplie à 50% de son volume par un liquide ayant une viscosité similaire à celle de l'huile (~10 ⁻³ Pa s) et présentant une atténuation optique dans le domaine visible de 3dB/cm. Il en résulterait une plage de gradation potentielle de l'intensité lumineuse en sortie de la dalle pouvant varier de 25% (correspondant à une atténuation totale de 6dB), à 100%, en fonction de l'épaisseur de liquide traversée par la lumière provenant du panneau lumineux 4.

Selon un mode de réalisation, les faces latérales de la dalle translucide 5 sont recouvertes d'un revêtement ou d'une feuille réfléchissante, de sorte que la lumière qui s'échapperait de la dalle est redirigée vers la dalle, ce qui permet d'améliorer l'efficacité et d'élargir la plage de gradation.

Selon un mode de réalisation, comme illustré par la [Fig.2], le dispositif d'éclairage 3 comprend en outre un film 8 comprenant un motif décoratif, ledit film 8 recouvrant la dalle translucide 5.

Par exemple, le film 8 comprend une couche de polycarbonate sur laquelle est déposé un film décoratif ou une sérigraphie, correspondant alors au motif de décoration. Le film décoratif ou la sérigraphie peut éventuellement être modifié par l'opérateur au cours du temps, de sorte que le motif de décoration peut être modifié en fonction de la durée de vie du véhicule, de la saison, etc.

Selon un mode de réalisation, comme illustré par la [Fig.2], le dispositif d'éclairage 3 comprend en outre une couche protectrice 9 translucide, recouvrant le film 8. De préférence, la couche protectrice 9, le film 8 et la dalle translucide 5 sont empilés en regard de la surface émissive du panneau lumineux 4.

## Revendications

1. Véhicule, notamment ferroviaire, comprenant une caisse (1) portée par des roues (2) et, à l'intérieur de la caisse (1), un dispositif d'éclairage (3) comprenant un panneau lumineux (4) présentant une surface émissive et une dalle translucide (5) recouvrant ladite surface émissive, ledit véhicule étant **caractérisé en ce que** la dalle translucide (5) délimite un caisson translucide (6) clos rempli au moins partiellement par au moins un fluide (7).

2. Véhicule selon la revendication 1, dans lequel le dispositif d'éclairage (3) comprend en outre un film (8) avec un motif décoratif, ledit film (8) et la dalle translucide (5) étant empilés en regard de la surface émissive du panneau lumineux (4).

3. Véhicule selon la revendication 1 ou 2, dans lequel le dispositif d'éclairage (3) comprend en outre une couche protectrice (9) translucide.

4. Véhicule selon l'une quelconque des revendications 1 à 3, dans lequel le caisson translucide (6) de la dalle translucide (5) est un caisson de polycarbonate.

5. Véhicule selon l'une quelconque des revendications 1 à 4, dans lequel le fluide (7) est un gel ou un liquide, éventuellement coloré, ou un mélange de liquides non miscibles avec des densités optiques différentes.

6. Véhicule selon l'une quelconque des revendications 1 à 5, dans lequel le caisson (6) de la dalle translucide (5) comprend des faces latérales, perpendiculaires à la surface émissive du panneau lumineux (4), recouvertes d'un revêtement réflectif.

7. Véhicule selon l'une quelconque des revendications 1 à 6, dans lequel la dalle translucide (5) comprend, à l'opposé de la surface émissive, une surface apte à diffuser la lumière.

8. Véhicule selon l'une quelconque des revendications 2 à 7, dans lequel le film (8) comprend une couche de polycarbonate sur laquelle est déposé un film décoratif ou une sérigraphie.

9. Véhicule selon l'une quelconque des revendications 3 à 8, dans lequel la couche protectrice (9) est une couche translucide de polycarbonate.

10. Véhicule selon l'une quelconque des revendications 1 à 9, dans lequel la surface émissive du panneau lumineux (3) est parallèle à la direction de circulation du véhicule.
